Europäisches Patentamt

European Patent Office

Office européen des brevets

(19)

(11) **EP 1 546 259 B1**

(12) **FASCICULE DE BREVET EUROPEEN**

(45) Date de publication et mention
de la délivrance du brevet:
**07.06.2006 Bulletin 2006/23**

(51) Int Cl.:
***C08L 95/00*** (2006.01)    ***C08K 9/12*** (2006.01)
***C08K 9/02*** (2006.01)    ***C08K 3/32*** (2006.01)

(21) Numéro de dépôt: **03761618.2**

(22) Date de dépôt: **13.06.2003**

(86) Numéro de dépôt international:
**PCT/FR2003/001795**

(87) Numéro de publication internationale:
**WO 2004/003083 (08.01.2004 Gazette 2004/02)**

(54) **PRODUIT BITUMEUX ET SON PROCEDE DE PREPARATION**

BITUMINÖSES PRODUKT UND HERSTELLUNGSVERFAHREN DAFÜR

BITUMINOUS PRODUCT AND METHOD FOR PREPARING SAME

(84) Etats contractants désignés:
**AT BE BG CH CY CZ DE DK EE ES FI FR GB GR
HU IE IT LI LU MC NL PT RO SE SI SK TR**

(30) Priorité: **01.07.2002 US 392767 P
22.11.2002 FR 0214678**

(43) Date de publication de la demande:
**29.06.2005 Bulletin 2005/26**

(73) Titulaire: **Innophos, Inc.
Cranbury, NJ 08512-8000 (US)**

(72) Inventeurs:
• **DUPUIS, Dominique
F-60800 Crepy-en-Valois (FR)**

• **ORANGE, Gilles
F-95230 Soisy sous Montmorency (FR)**

(74) Mandataire: **Kayser, Martin
Bauer Vorberg Kayser
Patentanwälte
Lindenallee 43
50968 Köln (DE)**

(56) Documents cités:
**WO-A-99/58600        GB-A- 2 322 569**

• **DATABASE WPI Section Ch, Week 199937
Derwent Publications Ltd., London, GB; Class
A93, AN 1999-439737 XP002254898 & JP 11
181292 A (KAO CORP), 6 juillet 1999 (1999-07-06)**

**Description**

La présente invention a pour objet un produit bitumineux et ainsi que son procédé de préparation.

Par produit bitumineux, on entend les bitumes ou toutes les compositions à base de bitumes.

Les produits bitumineux sont notamment utilisés dans les domaines des chaussées, des matériaux de toitures, des revêtements, de l'étanchéité. On peut d'ailleurs citer l'utilisation de l'asphalte pour la réalisation des chaussées.

En général, les produits bitumineux comportent des agrégats ou des charges. Il peut s'agir de granulats ou cailloux, de sable, et de fines.

Toutefois, de tels produits présentent de nombreux inconvénients lorsqu'ils sont utilisés en tant que tels pour différentes applications : on peut citer notamment une sensibilité importante à la température, une adhérence limitée vis à vis des agrégats, des propriétés médiocres à basses températures, une faible résistance à la fatigue et aux chocs.

De plus les produits bitumineux sont difficiles à manipuler, et nécessitent des technologies spécifiques.

Ainsi dans le cas d'une chaussée, notamment dans le cas de la bande roulante d'une route, les constituants principaux sont des enrobés bitumineux qui sont constitués de 95 % en masse de granulés et de 5 % en masse de bitume qui sert de liant. Dans ce cas le rôle du bitume en tant que liant est prépondérant sur les propriétés de la route qui est soumise à diverses contraintes d'origine mécanique : fracture thermique, fatigue et orniérage.

En effet à basse température (environ inférieure à -10° C), le liant, c'est à dire le bitume, se trouve dans un état vitreux et devient cassant. Il peut alors se former de longues fissures transversales dues aux contraintes thermiques (fractures thermiques) qui sont des microfissures à cause de l'hétérogénéité du matériau.

A plus haute température (environ au moins 0° C), la chaussée peut toujours se fissurer sous l'effet de la fatigue. Il en résulte une multitude de fissures principalement longitudinales interconnectées.

Enfin, à des températures plus élevées (environ 60°C), le bitume passe de l'état de solide à l'état visqueux, de plus en plus fluide. Aussi le passage répété de masses élevées que constituent les véhicules, dont les poids-lourds, sur la chaussée contribuent à déformer le bitume de façon permanente et donc la chaussée. Ce phénomène est à l'origine des ornières.

Le liant assure en outre l'imperméabilisation de la chaussée, protégeant ainsi les soubassements de la route.

Les principales caractéristiques demandées à la chaussée d'une route et donc aux produits bitumineux qui servent de liant sont donc :

- une bonne résistance aux fissurations à basse température (typiquement - 15° C),
- une faible déformation à haute température (typiquement + 60° C),
- une bonne résistance à la fatigue pour améliorer la durabilité.

Les industriels utilisent généralement des additifs pour palier aux déficiences des produits bitumineux et ainsi améliorer leurs propriétés.

Notamment il est connu d'ajouter à ces produits bitumineux des acides phosphoriques ou des acides polyphosphoriques.

Cependant l'utilisation de ces acides est peu aisée car ces produits sont très visqueux et donc difficilement manipulables. Il s'en suit des pertes de produit non négligeables ce qui impliquent des coûts plus élevés.

De plus ces acides peuvent cristalliser au cours de leur stockage, aussi ils ne sont plus utilisables en l'état à moins de leur faire subir un traitement thermique, ce qui implique des manipulations supplémentaires et une augmentation des coûts due à l'étape de traitement thermique.

Afin de répondre aux exigences des industriels il est devenu nécessaire de trouver des additifs qui pallient les inconvénients des acides phosphoriques ou des acides polyphosphoriques.

Aussi le problème que se propose de résoudre la présente invention est de fournir un additif pour produits bitumineux facilement manipulable comparativement aux acides phosphoriques ou des acides polyphosphoriques.

Dans ce but l'invention propose un procédé de préparation d'un produit bitumineux caractérisé en ce qu'il utilise un composé à base d'un acide phosphorique ou polyphosphorique supporté sur un oxyde minéral de grande porosité. L'invention propose également un produit bitumineux susceptible d'être obtenu par le procédé décrit ci-dessus.

L'avantage du composé à base d'un acide phosphorique ou polyphosphorique supporté sur un oxyde minéral de grande porosité est qu'il est sous forme de poudre et donc est très facilement manipulable par rapport aux solutions d'acides citées ci-dessus qui sont très visqueuses.

Un autre avantage de ce composé est qu'il permet de renforcer les produits bitumineux dans lesquels il est incorporé, notamment au niveau de la rigidité à haute température.

Enfin ce composé conserve les mêmes propriétés que celles des acides phosphoriques ou polyphosphoriques.

D'autres avantages et caractéristiques de la présente invention apparaîtront clairement à la lecture de la description et des exemples donnés à titre purement illustratif et non limitatif, qui vont suivre.

L'invention concerne tout d'abord un procédé de préparation d'un produit bitumineux caractérisé en ce qu'il utilise un composé à base d'un acide phosphorique ou polyphosphorique supporté sur un oxyde minéral de grande porosité.

Le composé utilisé selon l'invention comprend un oxyde minéral.

L'oxyde minéral doit être de grande porosité cela signifie que son volume poreux est d'au moins 1 ml/g et de préférence d'au moins 3 ml/g.

L'oxyde minéral peut également être de grande surface.

L'oxyde minéral de grande porosité peut être choisi notamment parmi les silices, les alumines, les silicoaluminates.

De préférence l'oxyde minéral est une silice. De préférence ladite silice est une silice précipitée. Il peut s'agir par exemple d'une silice Tixosil 38A, Tixosil 38D, Tixosil 38X ou Tixosil 365 de la société Rhodia.

L'oxyde minéral peut également être lamellaire ou exfolié.

L'oxyde minéral peut également être obtenu à partir d'un précurseur d'oxyde.

Le composé utilisé selon l'invention comprend également un acide phosphorique ou polyphosphorique.

De préférence l'acide phosphorique est l'acide orthophosphorique.

L'acide orthophosphorique encore appelé acide monophosphorique correspond à $H_3PO_4$.

Les acides polyphosphoriques selon l'invention peuvent être choisis parmi ceux décrits dans le livre intitulé « Phosphorus an outline of its Chemistry, Biochemistry and Uses », fifth Edition, D.E.C. Corbridge, Elsevier, 1995 page 170 et 180 à 182.

L'acide polyphosphorique est choisi de préférence parmi l'acide pyrophosphorique ou acide diphosphorique de formule $H_4P_2O_7$, l'acide triphosphorique de formule $H_5P_3O_{10}$, les acides polyphosphoriques de formule $H_{n+2}P_nO_{3n+1}$, les acides métaphosphoriques de formule $H_nP_nO_{3n}$ ou leur mélange.

Comme indiqué à la page 181 du document « Phosphorus an outline of its Chemistry, Biochemistry and Uses » mentionné ci-dessus, l'acide phosphorique ou les acides polyphosphoriques commerciaux sont caractérisés par leur équivalent en $P_2O_5$ ou $H_3PO_4$ exprimés en pourcentage par rapport au poids.

Ainsi il existe une classe d'acides dits superphosphoriques dont l'équivalent en $H_3PO_4$ est supérieur à 100. Ces acides superphosphoriques sont les acides polyphosphoriques préférés.

Le composé mis en oeuvre selon l'invention peut être réalisé par mise en contact de l'oxyde minéral avec l'acide phosphorique ou polyphosphorique.

La quantité maximale d'acide phosphorique ou polyphosphorique mise en oeuvre correspond à la quantité maximale dudit acide absorbable par l'oxyde minérale.

Le composé mis en oeuvre selon l'invention peut être réalisé par un procédé qui comprend une étape de séchage après la mise en contact de l'oxyde minéral et de l'acide phosphorique ou polyphosphorique.

De plus le composé mis en oeuvre selon l'invention peut être hydrophobé. Dans ce cas on préférera utiliser des hydrophobants choisi parmi les silicones ou les acides gras.

Plusieurs modes de réalisation sont possibles pour l'incorporation du composé selon la présente invention dans la composition de bitume.

Parmi ceux-ci un mode de réalisation concerne un procédé comprenant les étapes suivantes :

1-on chauffe la composition de bitume à une température comprise entre 120 et 190°C ;

2-on ajoute, sous agitation, une quantité suffisante de composé selon l'invention à la composition de bitume de l'étape 1.

L'invention concerne ensuite un produit bitumineux susceptible d'être obtenu par le procédé décrit ci-dessus.

Le produit bitumineux selon l'invention peut être préparé selon un procédé de préparation d'enrobés à chaud qui met en oeuvre le composé selon l'invention.

Ce procédé d'enrobés à chaud comprend une étape supplémentaire au procédé précédent. Cette étape consiste à ajouter sous agitation et à une température comprise entre 120 et 190°C des granulats dans la composition de bitume avant, pendant, simultanément, ou après l'ajout de composés selon 'invention.

Par exemple ce procédé d'enrobés à chaud peut comprendre les étapes suivantes :

1-on chauffe la composition de bitume à une température comprise entre 120 et 190°C ;

2-on ajoute, sous agitation, une quantité suffisante de composé selon l'invention à la composition de bitume de l'étape 1 ;

3- On ajoute sous agitation des granulats dans la composition de bitume de l'étape 2.

En général, les granulats sont préalablement chauffés à une température supérieure à 120°C, et généralement comprise entre 120 et 190°C.

L'invention concerne aussi le produit bitumineux susceptible d'être obtenu par le procédé d'enrobés à chaud décrit ci-dessus.

Le produit bitumineux selon l'invention peut aussi être préparé selon un procédé de préparation d'enrobés à froid qui met en oeuvre le composé selon l'invention.

Ce deuxième mode de réalisation possible pour l'incorporation du composé selon l'invention s'effectue à température ambiante.

Ce procédé comprend les étapes suivantes :

1- On prépare une émulsion de bitume en mélangeant de l'eau, du bitume et un émulsifiant à température ambiante;

2- On incorpore une quantité suffisante de composé selon l'invention dans une émulsion de bitume sous agitation à température ambiante ;

3-on épand l'émulsion obtenue à l'étape 2 pour obtenir une couche uniforme du mélange obtenu à l'étape 2;

4-on casse l'émulsion de bitume.

L'invention concerne aussi le produit bitumineux susceptible d'être obtenu par le procédé d'enrobés à froid décrit ci-dessus. Il est également possible d'ajouter sous agitation et à une température ambiante des granulats dans la composition de bitume après l'ajout de composé selon l'invention de l'étape 2.

Enfin un troisième mode de réalisation est possible également qui allie les deux modes de réalisation précédents « à chaud » et « à froid ».

Ce procédé comprend les étapes suivantes :

1-on chauffe la composition de bitume à une température comprise entre 120 et 190°C ;

2-on ajoute une quantité suffisante de composé selon l'invention à la composition de bitume de l'étape 1 sous agitation;

3- On prépare une émulsion du bitume obtenu à l'étape 2 en mélangeant de l'eau, ledit bitume et un émulsifiant;

4-on épand l'émulsion obtenue à l'étape 3 pour obtenir une couche uniforme du mélange obtenu à l'étape 3;

5-on casse l'émulsion de bitume.

Ce procédé peut comprendre une étape supplémentaire qui consiste à ajouter sous agitation et à une température ambiante des granulats dans l'émulsion de bitume obtenue à l'étape 3 du procédé.

Il faut noter que des exemples de bitumes auxquels le composé selon la présente invention peut être ajoutée comprennent les bitumes naturels, les pyrobitumes et les bitumes artificiels. Des bitumes particulièrement préférés sont ceux utilisés pour les chaussées, tels que l'asphalte ou la malthe. De manière encore plus préférentielle on utilise l'asphalte.

Le produit bitumineux selon l'invention peut également contenir d'autres additifs habituellement utilisés dans le domaine du bitume.

On peut citer à titre d'additifs convenables selon l'invention les élastomères, les plastomères, ou tout agent chimique connu de l'homme du métier afin d'améliorer les propriétés physico-chimiques et la résistance à la décohésion, seuls ou en mélanges.

Les émulsifiants utilisés pour émulsionner le bitume sont des émulsifiants habituellement utilisés par l'homme du métier dans ce domaine technique.

On peut également prévoir que le bitume utilisé sera préalablement oxydé à chaud par contact avec de l'air.

Enfin l'invention concerne l'utilisation du produit bitumineux selon l'invention pour la fabrication de mortier, de revêtement notamment de revêtement routier.

Les exemples suivants illustrent l'invention sans toutefois en limiter la portée.

## EXEMPLES :

**1/ Mode Opératoire pour la préparation d'un additif pour bitume de type acide phosphorique sur support silice.**

1.1/ Détermination du volume poreux total du support

Il s'agit d'introduire une quantité d'eau nécessaire pour remplir tous les pores du support. Notre support ici est la silice T38A lot 0012191 de Rhodia.

On pèse un gramme de silice et y introduit de l'eau au moyen d'une burette. Le volume nécessaire pour remplir les pores est de 2,1 ml.

Donc :

# Volume poreux total de T38A = 2,1ml/g

## 1.2/ Imprégnation à sec de l'acide orthophosphorique à 85% à température ambiante

On imprègne 200g de silice. L'appareil utilisé est un bol tournant.

Sachant que la densité de H3PO4 à 85% est de 1.7, il faut donc (2,1 x 1,7)g x 200g = 714g d'acide H3PO4 à 85%.

En pratique, on n'a pu imprégner que 658g d'acide.

Lorsque l'imprégnation est finie, on laisse la poudre saturée « mouillée » mûrir pendant une heure et on sèche ensuite la poudre en étuve à 50°C pendant 72 heures.

## Taux maximal d'acide orthophosphorique imprégné (pourcentages en poids)

$$\text{Le taux d'acide orthophosphorique à 85 \%} = 658g/(658+200) = 76.7\%$$

$$\text{Le taux d'acide orthophosphorique à 100\%} = (658 \ x \ 0.85)/(658+200) = 65.2\%$$

## 2/ Propriétés rhéologiques de bitumes en présence ou non de l'additif préparé dans l'exemple 1/.

Le bitume de grade 70/100 (Pen) a été utilisé pour les essais. Il s'agit d'un bitume de provenance SHELL Petit Couronne (France).

### 2.1/ Préparation du bitume additivé

Le bitume est prélevé dans un fût, puis placé dans un bêcher : le bécher est alors chauffé sur une plaque chauffante jusqu'à 170°C.

L'incorporation de l'additif sous forme poudre est alors effectuée.

Le mélange est alors maintenu à 170°C pendant environ 25 minutes en agitant vivement à l'aide d'un agitateur rotatif (260 tours/min). La température est maintenue strictement en dessous de 180°C, afin de ne pas altérer les caractéristiques du bitume.

Après le malaxage, le mélange est maintenu 5 minutes à environ 170°C sous brassage à vitesse lente afin d'éliminer les bulles d'air qui auraient pu se former.

Le mélange est alors terminé, et prêt à être utilisé.

### 2.2/ Essais de rhéologie

La caractérisation rhéologique du bitume additivé est faite selon une procédure dérivée des normes SHRP (AASHTO TP5-98) : essais DSR : Dynamic Shear Rheometer.

Le domaine de fréquence utilisé va de 7,8 Hz à 200 Hz, pour un domaine de température de 25°C à 60°C.

Les essais de rhéologie sont réalisés en cisaillement annulaire, à l'aide d'un viscoélasticimètre Metravib RDS VA 2000.

Le bitume liquide est introduit dans la cellule de cisaillement préalablement chauffée à 110°C. Lorsque la température est descendue vers 45°C, le bitume ne coule plus et l'ensemble de la structure est alors serré et prêt pour les mesures.

L'échantillon de bitume, qui est cylindrique a une épaisseur de 1 mm.

Les essais sont réalisés à différentes températures (30, 40, 50 et 60°C) et dans un domaine de fréquences permettant de mettre en évidence le comportement du matériau : 7,8 ; 15,6 ; 31,2 ; 62,5 ; 125 et 200 Hz.

2.3/ <u>Résultats obtenus</u>

Les résultats obtenus concernent le module de Coulomb (module complexe) G*, les composantes élastiques G' et visqueuses G", et l'angle de phase δ.
Ces résultats peuvent être représentés soit à iso-fréquence en fonction de la température, soit à iso-température (isothermes) en fonction de la fréquence.
Trois produits ont été comparés :

i) Bitume de référence sans additif

ii) Bitume additivé poudre minérale traitée acide orthophosphorique selon l'invention

iii) A titre de comparaison : Bitume additivé avec 1,2% acide polyphosphorique sous forme liquide

Le tableau suivant (Tableau 1) rassemble les valeurs mesurées à 60°C, pour une fréquence de 7,8 Hz.

Tableau 1 :

|  | G* (Pa) | G' (Pa) | G" (Pa) | δ |
|---|---|---|---|---|
| Shell 70/100 (Bitume i) | 10.950 | 880 | 10.950 | 85,4 |
| Shell + poudre minérale (Bitume ii) | 18.500 | 3550 | 18.050 | 78,5 |
| Shell + Acide APP (1,2%) (Bitume iii) | 21.250 | 4750 | 20.900 | 77,2 |

On voit clairement l'effet de renforcement (rigidification) apporté par l'additif poudre : augmentation du module complexe G*, et surtout de la composante élastique G'.
L'angle de phase δ est sensiblement réduit, ce qui traduit un comportement plus élastique du bitume additivé.
Le tableau suivant (Tableau 2) rassemble les valeurs mesurées à 25°C (et 40°C pour l'angle de phase δ), pour une fréquence de 7,8 Hz.
La température critique Tc est déterminée selon le critère décrit dans la procédure SHRP :
Tc est la température pour laquelle le rapport G*/sin δ est supérieur à 1000 Pa.
La susceptibilité thermique du bitume est déterminée par un indice IS : indice de susceptibilité thermique.
IS est défini par la pente a de la droite log G* = f(T) à 7,8 Hz.

$$\frac{20 - IS}{10 + IS} = 50.|a|$$

Tableau 2 :

|  | G* 25°C ($10^6$ Pa) | G' 25°C ($10^6$ Pa) | G" 25°C ($10^6$ Pa) | δ 40°C | Tc (°C) | IS |
|---|---|---|---|---|---|---|
| Shell 70/100 (Bitume i) | 2,57 | 1,02 | 2,35 | 78,0 | 74,5 | - 3,18 |
| Shell + poudre minérale (Bitume ii) | 3,72 | 1,91 | 3,19 | 71,1 | 78,1 | -3,05 |
| Shell + Acide APP (1,2%) (Bitume iii) | 3,33 | 1,73 | 2,84 | 69,5 | 80,7 | -2,75 |

La température critique Tc a fortement augmentée en présence de l'additif poudre.
De même, on constate une baisse sensible de la susceptibilité thermique IS.
L'angle de phase δ (à 40°C) est fortement réduit, ce qui traduit un comportement plus élastique du bitume additivé.

**Revendications**

**1.** Procédé de préparation d'un produit bitumineux **caractérisé en ce qu'**il utilise un composé à base d'un acide phosphorique ou polyphosphorique supporté sur un oxyde minéral de grande porosité.

2. Procédé selon la revendication 1 **caractérisé en ce que** l'oxyde minéral de grande porosité est un oxyde minéral ayant un volume poreux d'au moins 1 ml/g.

3. Procédé selon l'une des revendications précédentes **caractérisé en ce que** l'oxyde minéral de grande porosité est un oxyde minéral ayant un volume poreux d'au moins 3 ml/g.

4. Procédé selon l'une des revendications précédentes **caractérisé en ce que** l'oxyde minéral de grande porosité est choisi parmi les silices, les alumines, les silicoaluminates.

5. Procédé selon l'une des revendications précédentes **caractérisé en ce que** l'oxyde minéral de grande porosité est choisi parmi les silices,

6. Procédé selon l'une la revendication 5 **caractérisé en ce que** l'oxyde minéral de grande porosité est une silice précipitée.

7. Procédé selon l'une des revendications précédentes **caractérisé en ce que** l'acide phosphorique est l'acide orthophosphorique.

8. Procédé selon l'une des revendications précédentes **caractérisé en ce que** l'acide polyphosphorique est choisi parmi l'acide pyrophosphorique ou acide diphosphorique de formule $H_4P_2O_7$, l'acide triphosphorique de formule $H_5P_3O_{10}$, les polyphosphoriques acides de formule $H_{n+2}P_nO_{3n+1}$, les acides métaphosphoriques de formule $H_nP_nO_{3n}$ ou leur mélange.

9. Procédé selon l'une des revendications précédentes **caractérisé en ce que** la quantité maximale d'acide phosphorique ou polyphosphorique mise en oeuvre correspond à la quantité maximale dudit acide absorbable par l'oxyde minérale.

10. Procédé selon l'une des revendications précédentes **caractérisé en ce que** le composé est réalisé par un procédé qui comprend une étape de déshydratation après la mise en contact de l'oxyde minéral et de l'acide phosphorique ou polyphosphorique.

11. Procédé selon l'une des revendications précédentes **caractérisé en ce que** le composé est un composé hydrophobé.

12. Procédé selon la revendication 11 **caractérisé en ce que** le composé hydrophobé comprend un hydrophobant choisi parmi les silicones, les acides gras.

13. Produit bitumineux susceptible d'être obtenu par le procédé selon l'une des revendications 1 à 12.

14. Utilisation du produit selon la revendication 13 pour la fabrication de mortier, de revêtement notamment de revêtement routier.

**Claims**

1. A method of preparing a bituminous product, **characterized in that** it uses a compound based on a phosphoric or polyphosphoric acid with a high porosity mineral oxide as a carrier.

2. The method as set forth in claim 1, **characterized in that** the high porosity mineral oxide is a mineral oxide the pore volume of which is 1 ml/g at least.

3. The method as set forth in any one of the afore mentioned claims, **characterized in that** the high porosity mineral oxide is a mineral oxide the pore volume of which is 3 ml/g at least.

4. The method as set forth in any one of the afore mentioned claims, **characterized in that** the high porosity mineral oxide is selected from the group consisting of the silica, the alumina, the silicoaluminates.

**5.** The method as set forth in any one of the afore mentioned claims, **characterized in that** the high porosity mineral oxide is selected from the group consisting of the silica.

**6.** The method as set forth in claim 5, **characterized in that** the high porosity mineral oxide is precipitated silica.

**7.** The method as set forth in any one of the afore mentioned claims, **characterized in that** the phosphoric acid is the orthophosphoric acid.

**8.** The method as set forth in any one of the afore mentioned claims, **characterized in that** the polyphosphoric acid is selected from the group consisting of the pyrophosphoric acid or the diphosphoric acid of the formula $H_4P_2O_7$, the triphosphoric acid of the formula $H_5P_3O_{10}$, the polyphosphoric acids of the formula $H_{n+2}P_nO_{3n+1}$, the metaphosphoric acids of the formula $H_nP_nO_{3n}$ or of mixtures thereof.

**9.** The method as set forth in any one of the afore mentioned claims, **characterized in that** the maximum amount of phosphoric or of polyphosphoric acid used corresponds to the maximum amount of said acid that may be absorbed by the mineral oxide.

**10.** The method as set forth in any one of the afore mentioned claims, **characterized in that** the compound is obtained by a method comprising a dehydration step following contacting the mineral oxide with the phosphoric or the polyphosphoric acid.

**11.** The method as set forth in any one of the afore mentioned claims, **characterized in that** the compound is a hydrophobed compound.

**12.** The method as set forth in claim 11, **characterized in that** the hydrophobed compound comprises a hydrophobing agent selected from the group consisting of the silicones, the fatty acids.

**13.** A bituminous product to be obtained with the method as set forth in any one of the claims 1 through 12.

**14.** Use of the product as set forth in claim 13 for making mortar for paving, more specifically for paving roads.

**Patentansprüche**

**1.** Verfahren zur Herstellung eines bitumenhaltigen Stoffes, **dadurch gekennzeichnet, dass** es eine Verbindung aus einer Phosphorsäure oder einer Polyphosphorsäure mit einem hochporösen Mineraloxid als Träger verwendet.

**2.** Verfahren nach Anspruch 1, **dadurch gekennzeichnet, dass** das hochporöse Mineraloxid ein Mineraloxid mit einem Porenvolumen von mindestens 1 ml/g ist.

**3.** Verfahren nach einem der vorstehenden Ansprüche, **dadurch gekennzeichnet, dass** das hochporöse Mineraloxid ein Mineraloxid mit einem Porenvolumen von mindestens 3 ml/g ist.

**4.** Verfahren nach einem der vorstehenden Ansprüche, **dadurch gekennzeichnet, dass** das hochporöse Mineraloxid ausgewählt ist aus der Gruppe umfassend die Siliziumdioxide, die Aluminiumoxide, die Alumosilikate.

**5.** Verfahren nach einem der vorstehenden Ansprüche, **dadurch gekennzeichnet, dass** das hochporöse Mineraloxid aus der Gruppe der Siliziumdioxide ausgewählt ist.

**6.** Verfahren nach Anspruch 5, **dadurch gekennzeichnet, dass** das hochporöse Mineraloxid ein gefälltes Siliziumdioxid ist.

**7.** Verfahren nach einem der vorstehenden Ansprüche, **dadurch gekennzeichnet, dass** die Phosphorsäure die Orthophosphorsäure ist.

**8.** Verfahren nach einem der vorstehenden Ansprüche, **dadurch gekennzeichnet, dass** die Polyphosphorsäure ausgewählt ist aus der Gruppe umfassend die Pyrophosphorsäure oder die Diphorsphorsäure der Formel $H_4P_2O_7$, die Triphosphorsäure der Formel $H_5P_3O_{10}$, die Polyphosphorsäuren der Formel $H_{n+2}P_nO_{3n+1}$, die Metaphosphorsäuren

der Formel $H_nP_nO_{3n}$ oder deren Mischungen.

9. Verfahren nach einem der vorstehenden Ansprüche, **dadurch gekennzeichnet, dass** die Höchstmenge an verwendeter Phosphor- oder Polyphosphorsäure der Höchstmenge an dieser Säure entspricht, die das Mineraloxid in der Lage ist aufzunehmen.

10. Verfahren nach einem der vorstehenden Ansprüche, **dadurch gekennzeichnet, dass** die Verbindung durch ein Verfahren hergestellt wird, das einen Schritt umfasst, in welchem nach dem In-Kontakt-Bringen des Mineraloxids mit der Phosphor- bzw. Polyphosphorsäure eine Dehydratisierung stattfindet.

11. Verfahren nach einem der vorstehenden Ansprüche, **dadurch gekennzeichnet, dass** die Verbindung eine hydrophobierte Verbindung ist.

12. Verfahren nach Anspruch 11, **dadurch gekennzeichnet, dass** die hydrophobierte Verbindung ein hydrophobierendes Mittel umfasst, das aus der Gruppe umfassend die Silikone, die Fettsäuren ausgewählt ist.

13. Bitumenhaltiger Stoff, der nach dem Verfahren nach einem der Ansprüche 1 bis 12 herstellbar ist.

14. Verwendung des Stoffes nach Anspruch 13 zur Herstellung von Mörtel für Beläge, insbesondere für Straßenbeläge.